# EUROPÄISCHE PATENTANMELDUNG

(11) **EP 4 124 222 A2**
(43) Veröffentlichungstag der Anmeldung: **01.02.2023**
(21) Anmeldenummer: 22183295.9
(22) Anmeldetag: 06.07.2022
(51) Int. Cl.: A01B 69/04, A01B 79/00, B60D 1/36

(54) **VERFAHREN ZUR UNTERSTÜTZUNG EINES AN EINER LANDWIRTSCHAFTLICHEN ANBAUGERÄTESCHNITTSTELLE DURCHZUFÜHRENDEN KUPPELVORGANGS**

(30) Priorität: 29.07.2021 DE 102021119686
(71) Anmelder: Deere & Company, Moline, IL 61265 (US)
(72) Erfinder: Schmidt, Martin, Mannheim (DE); Kegel, Volker, Mannheim (DE)
(74) Vertreter: Dehnhardt, Florian Christopher

(57) **Zusammenfassung**

Verfahren zur Unterstützung eines an einer landwirtschaftlichen Anbaugeräteschnittstelle (12) durchzuführenden Kuppelvorgangs, wobei die Anbaugeräteschnittstelle (12) der Herstellung einer lösbaren Kupplungsverbindung zwischen einer Kupplungseinrichtung (14) eines landwirtschaftlichen Traktors (16) und einem daran anzubringenden Anbaugerät (18) dient. Beim Abkuppeln des Anbaugeräts (18) wird mittels einer Positionserfassungseinheit ein Abstellort (32) des Anbaugeräts (18) sowie eine ausgehend vom Abstellort (32) entlang einer vorgegebenen Wegstrecke (d₁) des landwirtschaftlichen Traktors (16) zurückgelegte Fahrttrajektorie (34) kartografisch bestimmt sowie als zugehöriger Datensatz in einer Speichereinheit abgelegt. Beim Wiederankuppeln des selben Anbaugeräts (18) wird der Datensatz aus der Speichereinheit abgerufen und dazu herangezogen, um den landwirtschaftlichen Traktor (16) ausgehend von einer vorgegebenen sowie vorab einzunehmenden Startposition (36) entlang der Fahrttrajektorie (34) bis zum Abstellort (32) durch Ausgabe zugehöriger Steuerbefehle zurückzuleiten.

## Beschreibung

Die Erfindung betrifft ein Verfahren zur Unterstützung eines an einer landwirtschaftlichen Anbaugeräteschnittstelle durchzuführenden Kuppelvorgangs, wobei die Anbaugeräteschnittstelle der Herstellung einer lösbaren Kupplungsverbindung zwischen einer Kupplungseinrichtung eines landwirtschaftlichen Traktors und einem daran anzubringenden Anbaugerät dient.

In diesem Zusammenhang geht aus der US 2010/0212170 A1 ein System hervor, das einen Fahrer dabei unterstützt, einen Anhänger an einem Fahrzeug anzukuppeln. Das System umfasst drei punktförmige Lichtquellen, die ein Lichtmuster auf einer reflektierenden Oberfläche des anzubringenden Anhängers derart erzeugen, dass dieses in einem einzelnen Lichtpunkt konvergiert, sobald der Anhänger eine zum Ankuppeln geeignete Position gegenüber dem Fahrzeug einnimmt.

Das insofern bekannte System ist vorrangig für eine Verwendung im Pkw-Bereich vorgesehen. Wird die Reflexion des Lichtmusters durch Staub oder Verschmutzungen beeinträchtigt, mithin durch Bedingungen, wie sie für einen Einsatz im landwirtschaftlichen Bereich üblich sind, lässt sich die Sichtbarkeit der konvergierenden Lichtpunkte am Anhänger nicht mehr ohne weiteres gewährleisten.

Es ist daher Aufgabe der vorliegenden Erfindung, ein Verfahren der eingangs genannten Art an die Anforderungen landwirtschaftlicher Anwendungen anzupassen.

Diese Aufgabe wird durch ein Verfahren mit den Merkmalen des Patentanspruchs 1 gelöst.

Das erfindungsgemäße Verfahren zur Unterstützung eines an einer landwirtschaftlichen Anbaugeräteschnittstelle durchzuführenden Kuppelvorgangs, bei dem die Anbaugeräteschnittstelle der Herstellung einer lösbaren Kupplungsverbindung zwischen einer Kupplungseinrichtung eines landwirtschaftlichen Traktors und einem daran anzubringenden Anbaugerät dient, sieht vor, dass in einem ersten Schritt bei hergestellter Kupplungsverbindung von einer Kontrolleinheit überprüft wird, ob ein mit einem Abkuppeln des Anbaugeräts einhergehender Abstellvorgang ausgeführt wird, wobei in einem solchen Fall seitens der Kontrolleinheit in einem zweiten Schritt mittels einer Positionserfassungseinheit ein Abstellort des Anbaugeräts sowie eine ausgehend vom Abstellort entlang einer vorgegebenen Wegstrecke d₁ vom landwirtschaftlichen Traktor zurückgelegte Fahrttrajektorie kartografisch bestimmt und in einem dritten Schritt gemeinsam mit von einer Informationseinheit bereitgestellten Typinformationen hinsichtlich des abgestellten Anbaugeräts in einer Speichereinheit als zugehöriger Datensatz abgelegt wird, wobei in einem vierten Schritt zum Wiederankuppeln des selben Anbaugeräts von der Kontrolleinheit der Datensatz aus der Speichereinheit abgerufen wird, um den landwirtschaftlichen Traktor ausgehend von einer vorgegebenen sowie vorab einzunehmenden Startposition entlang der Fahrttrajektorie bis zum Abstellort durch Ausgabe zugehöriger Steuerbefehle zurückzuleiten.

Mit anderen Worten wird der Abstellvorgang kartografisch bis zum Ende der vorgegebenen Wegestrecke d₁ aufgezeichnet, deren Länge typischerweise in der Größenordnung von 10 bis 20 Metern liegt, wobei der landwirtschaftliche Traktor zum Wiederankuppeln des selben Anbaugeräts auf Grundlage der ausgegebenen Steuerbefehle entlang der aufgezeichneten Fahrttrajektorie zum Abstellort zurückgeführt wird. Hierzu hat der Bediener den landwirtschaftlichen Traktor lediglich mit in Fahrtrichtung liegender, mithin dem anzukuppelnden Anbaugerät zugewandter Kupplungseinrichtung in die vorgegebene Startposition zu verbringen. Letztere ergibt sich dabei aus dem Endpunkt der beim Abkuppeln zurückgelegten Wegstrecke d₁ bzw. Fahrttrajektorie.

Das erfindungsgemäße Verfahren stellt nicht nur eine wesentliche Erleichterung für den Bediener des landwirtschaftlichen Traktors dar, auch ist dieses weitgehend unempfindlich gegenüber widrigen Umgebungsbedingungen, wie sie für einen Einsatz im landwirtschaftlichen Bereich üblich sind. Das erfindungsgemäße Verfahren ist zudem verwendbar in Verbindung mit Anbaugeräten und Kupplungseinrichtungen beliebiger Bauart.

Die in der Speichereinheit abgelegten Typinformationen, die unter anderem Angaben hinsichtlich des konkreten Anbaugerätemodells enthalten können, erlauben in Verbindung mit dem kartografisch hinterlegten Abstellort ein leichteres Wiederauffinden des abgestellten Anbaugeräts. Dies ist gerade bei größeren landwirtschaftlichen Betrieben, die über einen entsprechend umfangreichen Maschinenpark verfügen, von Belang.

Die Bereitstellung der Typinformationen seitens der Informationseinheit kann insbesondere bedienerseitig erfolgen, wozu die Informationseinheit eine Bedienerschnittstelle zur manuellen Eingabe bzw. Auswahl des betreffenden Anbaugeräts in Form von Angaben zu Hersteller, Modell und dergleichen aufweist. Abweichend davon kann die Informationseinheit auch mit einer Datenschnittstelle zum drahtlosen Empfang von entsprechenden Identifikationsdaten seitens eines an dem Anbaugerät befindlichen RFID-Transmitters ausgestattet sein, in dem die betreffenden Identifikationsdaten hinterlegt sind und bei Annäherung selbsttätig abgerufen werden.

Vorteilhafte Weiterbildungen der erfindungsgemäßen Kupplungseinrichtung gehen aus den Unteransprüchen hervor.

Vorzugsweise umfasst die Positionserfassungseinheit mindestens einen GPS-Empfänger, wobei die Kontrolleinheit von dem mindestens einen GPS-Empfänger bereitgestellte Positionsinformationen dahingehend bewertet, ob diese eine zur kartografischen Bestimmung des Abstellorts sowie der Fahrttrajektorie hinreichende Mindestgenauigkeit aufweisen. Ist die geforderte Mindestgenauigkeit nicht gegeben, so veranlasst die Kontrolleinheit über die Bedienerschnittstelle die Ausgabe einer entsprechenden optischen und/oder akustischen Fahrerinformation. Zugleich wird der Aufzeichnungsvorgang beendet. Die Erzeugung eines fehlerhaften bzw. unbrauchbaren Datensatzes kann so vermieden werden.

Für den Fall, dass sich der GPS-Empfang nach Verlassen des Abstellorts beim nachfolgenden Durchfahren der vorgegebenen Wegstrecke d₁ soweit verschlechtert, dass die von dem mindestens einen GPS-Empfänger bereitgestellten Positionsinformationen die geforderte Mindestgenauigkeit nicht erreichen, ist es möglich, dass die Bestimmung der Fahrttrajektorie von der Kontrolleinheit virtuell fortgesetzt wird. Dies kann erfolgen, indem mittels eines Kamerasystems eine bildbasierte Erfassung prägnanter Merkmale des Anbaugeräts und/oder der Umgebung erfolgt, die als räumliche Orientierungspunkte für den Verlauf der Fahrttrajektorie sowie der Lage der zum Wiederankuppeln des Anbaugeräts einzunehmenden Startposition dienen. Zu diesem Zweck kann ein sogenannter Simultaneous Localization and Mapping (SLAM)-Algorithmus verwendet werden. Bei dem Kamerasystem handelt sich beispielsweise um eine RGB-Monokamera, eine Stereokamera oder eine nach dem Laufzeitverfahren arbeitende Time-of-Flight (ToF)-Kamera. Zum Wiederankuppeln des Anbaugeräts wird der landwirtschaftliche Traktor zunächst in die Nähe des Endpunkts der Fahrttrajektorie verbracht. Sobald die Kontrolleinheit anhand der von dem Kamerasystem bereitgestellten Bilddaten die für das betreffende Anbaugerät aufgezeichneten Orientierungspunkte räumlich identifiziert hat, wird der Ankuppelvorgang durch Ausgabe der zugehörigen Steuerbefehle von der Kontrolleinheit gestartet.

Der Vollständigkeit halber sei angemerkt, dass auch ein GPS-Empfängerpaar vorhanden sein kann, dessen einzelne GPS-Empfänger an verschiedenen Stellen des landwirtschaftlichen Traktors angeordnet sind. Dies ermöglicht es, zusätzlich den Schwimmwinkel und damit die Ausrichtung des landwirtschaftlichen Traktors am Abstellort bzw. entlang der Fahrtrajektorie in Bezug auf die Traktorhochachse zu bestimmen und als Bestandteil des Datensatzes in der Speichereinheit abzulegen. Abgesehen von GPS-Empfängern kommen dabei selbstverständlich auch andere, zur entsprechenden Positionsbestimmung geeignete Einrichtungen in Frage.

Des Weiteren besteht die Möglichkeit, dass die Kontrolleinheit auf die Ausführung eines Abstellvorgangs schließt, wenn an der Kupplungseinrichtung eine für ein Abkuppeln des Anbaugeräts charakteristische Abnahme der Kupplungslast erkannt wird. Diese Information kann als Initiator für die kartografische Aufzeichnung der Fahrttrajektorie sowie des Abstellorts dienen. Handelt es sich bei der Kupplungseinrichtung um einen Dreipunkt-Kraftheber mit rechten und linken Unterlenkern, die sich mittels eines hydraulischen Hubwerks heben und senken lassen, so können die in zugehörigen Hydraulikzylindern herrschenden Druckverhältnisse zur Beurteilung der auf die Unterlenker wirkenden Kupplungslast herangezogen werden. Die in den Hydraulikzylindern herrschenden Druckverhältnisse werden mittels wenigstens eines mit der Kontrolleinheit kommunizierenden Drucksensors aufgenommen.

Zusätzlich oder alternativ kann die Kontrolleinheit auch auf die Ausführung eines Abstellvorgangs schließen, wenn diese erkennt, dass eine auf ein Abkuppeln des Anbaugeräts hinweisende ISOBUS-Information und/oder eine insofern vorgenommene Bedienereingabe vorliegt. Eine entsprechende ISOBUS-Information wird insbesondere beim Trennen einer zwischen Anbaugerät und landwirtschaftlichem Traktor hergestellten ISOBUS-Steckverbindung erzeugt oder aber durch Abmelden des Anbaugeräts über die mit der Kontrolleinheit kommunizierende Bedienerschnittstelle.

Es ist denkbar, dass entlang der vorgegebenen Wegstrecke d₁ eine Relativlage des Anbaugeräts in Bezug auf den landwirtschaftlichen Traktor optisch erfasst und von der Kontrolleinheit als Bestandteil des Datensatzes in der Speichereinheit abgelegt wird. Die optische Erfassung erfolgt beispielsweise mittels des vorstehend erwähnten Kamerasystems, insbesondere bei Erreichen einer vorgegebenen Zwischenposition. Die Zwischenposition kann beispielsweise bei der halben Wegstrecke d₁ der zurückgelegten Fahrttrajektorie liegen. Die solchermaßen erfasste Relativlage erlaubt eine Beurteilung dahingehend, ob das Anbaugerät zwischenzeitlich bewegt bzw. verlagert wurde. Hierzu wird die in der Speichereinheit abgelegte Relativposition mit einer aktuellen Relativposition des Anbaugeräts verglichen, wobei letztere durch erneute optische Erfassung des Anbaugeräts ermittelt wird, sobald der landwirtschaftliche Traktor entlang der Fahrttrajektorie die vorgegebene Zwischenposition erreicht hat. Ist dies der Fall, so kann der Verlauf der Fahrttrajektorie von der Kontrolleinheit dahingehend angepasst werden, dass trotz der veränderten Lage des Anbaugeräts ein problemloses Wiederankuppeln möglich ist. Sollte dies nicht möglich sein, kann der Ankuppelvorgang von der Kontrolleinheit abgebrochen werden, wobei dies unter gleichzeitiger Ausgabe eines entsprechenden optischen und/oder akustischen Fahrerhinweises über die Bedienerschnittstelle erfolgt.

Daneben besteht die Möglichkeit, dass die Typinformationen von der Kontrolleinheit um eine entlang der vorgegebenen Wegstrecke d₁ erstellte fotografische Wiedergabe des Anbaugeräts ergänzt werden. Die ebenfalls von dem Kamerasystem erstellte fotografische Wiedergabe kann zur besseren Auffindbarkeit bzw. Identifizierbarkeit des anzukoppelnden Anbaugeräts über ein von der Bedienerschnittstelle umfasstes Display nebst dem weiteren Inhalt des zugehörigen Datensatzes angezeigt werden.

Grundsätzlich kann es sich jeweils um denselben landwirtschaftlichen Traktor oder aber um unterschiedliche landwirtschaftliche Traktoren handeln. Letzteres ist bei größeren Landwirtschaftsbetrieben regelmäßig der Fall. Unter derartigen Umständen kann vorgesehen sein, dass der Datensatz von der Kontrolleinheit an eine zentrale Datencloud übermittelt wird, sodass dieser über ein Farmmanagementsystem oder dergleichen für sämtliche in Frage kommenden Anwendungen zur Verfügung steht. Die Übermittlung an die Datencloud kann hierbei vorbehaltlich der Prüfung und Freigabe durch einen Bediener erfolgen.

Die nach dem Abstellen des Anbaugeräts durchfahrene Fahrttrajektorie kann entweder einen bedienerseitig vorgebbaren Verlauf aufweisen oder aber auf Veranlassung der Kontrolleinheit entlang einer Geraden zumindest teilautonom abgefahren werden. Im ersten Fall obliegt die Lenkung wie auch die Vorgabe der Fahrtgeschwindigkeit zur Gänze dem Bediener des landwirtschaftlichen Traktors, im zweiten Fall erfolgt die Lenkung seitens einer zugehörigen Fahrzeugsteuerung autonom, die Vorgabe der Fahrtgeschwindigkeit bleibt weiterhin dem Bediener überlassen. Eine derartige Fahrzeugsteuerung ist bei landwirtschaftlichen Traktoren des Herstellers John Deere unter der Bezeichnung "AutoTrac" bekannt.

Da zur Feldbearbeitung üblicherweise eine Vielzahl verschiedener Anbaugeräte eingesetzt wird, ist es denkbar, dass die Kontrolleinheit mehrere Datensätze von an verschiedenen Abstellorten befindlichen Anbaugeräten entsprechend ihrer aktuellen Entfernung zum landwirtschaftlichen Traktor sortiert, um eine entfernungsabhängige Auflistung verfügbarer Anbaugeräte zu erzeugen. Die Auflistung kann beispielsweise über das von der Bedienerschnittstelle umfasste Display angezeigt werden, sodass sich das anzukoppelnde Anbaugerät einschließlich des insofern abzurufenden Datensatzes bequem auswählen lässt. Zusätzlich ist die Anzeige einer kartografischen Übersichtsdarstellung der jeweiligen Abstellorte relativ zum landwirtschaftlichen Traktor denkbar, wobei der Bediener nach Auswahl des gewünschten Anbaugeräts zum zugehörigen Startpunkt navigiert wird.

Optional kann das anzukoppelnde Anbaugerät von der Kontrolleinheit bei Annäherung des landwirtschaftlichen Traktors optisch identifiziert werden, um den zugehörigen Datensatz selbsttätig aus der Speichereinheit abzurufen. Zur optischen Identifikation kann eine von dem vorgenannten Kamerasystem erstellte fotografische Wiedergabe des anzukoppelnden Anbaugeräts herangezogen werden, wozu diese mit den Bilddaten einer in der Speichereinheit enthaltenen Standardauswahl an Anbaugeräten verglichen wird. Die Bewertung der Übereinstimmung und damit die optische Identifikation des Anbaugeräts erfolgt seitens der Kontrolleinheit unter Verwendung eines neuronalen Netzwerks, insbesondere eines sogenannten Convolutional Neural Networks. Die Standardauswahl kann hierbei durch Einlernen weiterer Anbaugeräte bedienerseitig erweitert werden.

Eine weitere Komfortsteigerung ist für den Fall erzielbar, dass die Kupplungseinrichtung wenigstens ein bezüglich einer Betriebsposition verstellbares Kupplungselement zur Anbringung der Anbaugeräteschnittstelle aufweist, wobei die beim Abkuppeln des Anbaugeräts vorliegende Betriebsposition von der Kontrolleinheit als Bestandteil des Datensatzes in der Speichereinheit abgelegt wird. Die beim Abkuppeln eingenommene Betriebsposition lässt sich in diesem Fall bei Erreichen des Abstellorts wiederaufrufen, was ein Wiederankuppeln des Anbaugeräts zusätzlich erleichtert.

Bezüglich der Ausgabe der Steuerbefehle sind verschiedene Vorgehensweisen vorstellbar. So können diese in Form von Fahranweisungen über die mit der Kontrolleinheit kommunizierende Bedienerschnittstelle als entsprechende Lenk- bzw. Fahrtgeschwindigkeitsanweisungen ausgegeben werden, und/oder als autonome Eingriffe in eine Lenkung des landwirtschaftlichen Traktors. In letzterem Fall bleibt die Vorgabe der Fahrtgeschwindigkeit dem Bediener überlassen, wohingegen die Ausführung der Lenkeingriffe seitens der bereits erwähnten Fahrzeugsteuerung erfolgt.

Um den Bediener auf die Bereitschaft zur Ausführung des Ankuppelvorgangs hinzuweisen, kann vorgesehen sein, dass bei Erreichen der Startposition über eine mit der Kontrolleinheit kommunizierende Bedienerschnittstelle eine Freigabebenachrichtigung ausgegeben wird.

Das erfindungsgemäße Verfahren zur Unterstützung eines an einer landwirtschaftlichen Anbaugeräteschnittstelle durchzuführenden Kuppelvorgangs wird im Folgenden anhand der beigefügten Zeichnungen näher beschrieben. Hierbei beziehen sich identische Bezugszeichen auf übereinstimmende oder bezüglich ihrer Funktion vergleichbare Komponenten. Es zeigen:
- Fig. 1: ein schematisch dargestelltes Ausführungsbeispiel einer Anordnung zur Durchführung des erfindungsgemäßen Verfahrens,
- Fig. 2: eine von der Anordnung gemäß Fig. 1 ausgeführte Sequenz beim Abkuppeln eines an einer Kupplungseinrichtung eines landwirtschaftlichen Traktors angebrachten Anbaugeräts, und
- Fig. 3: eine von der Anordnung gemäß Fig. 1 ausgeführte Sequenz beim Wiederankuppeln des selben Anbaugeräts.

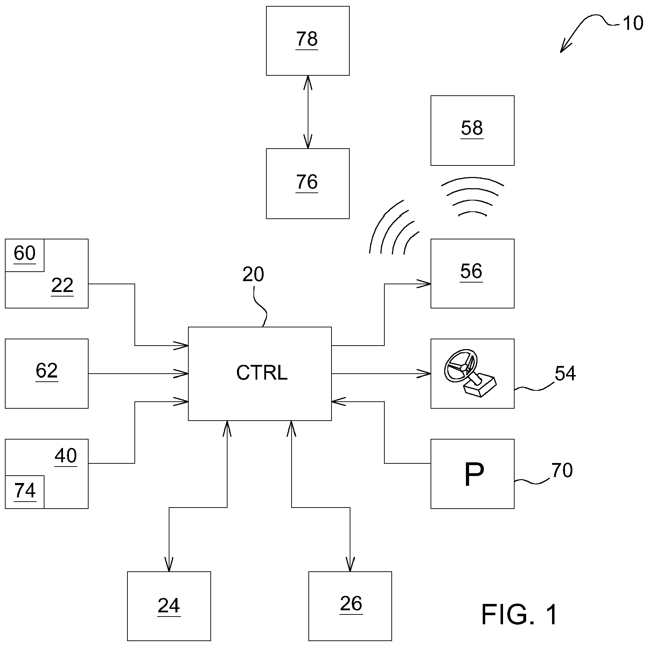

Fig. 1 zeigt ein Ausführungsbeispiel einer Anordnung 10 zur Durchführung des erfindungsgemäßen Verfahrens zur Unterstützung eines an einer landwirtschaftlichen Anbaugeräteschnittstelle 12 durchzuführenden Kuppelvorgangs, wobei die Anbaugeräteschnittstelle 12 der Herstellung einer lösbaren Kupplungsverbindung zwischen einer Kupplungseinrichtung 14 eines landwirtschaftlichen Traktors 16 und einem daran anzubringenden Anbaugerät 18 dient.

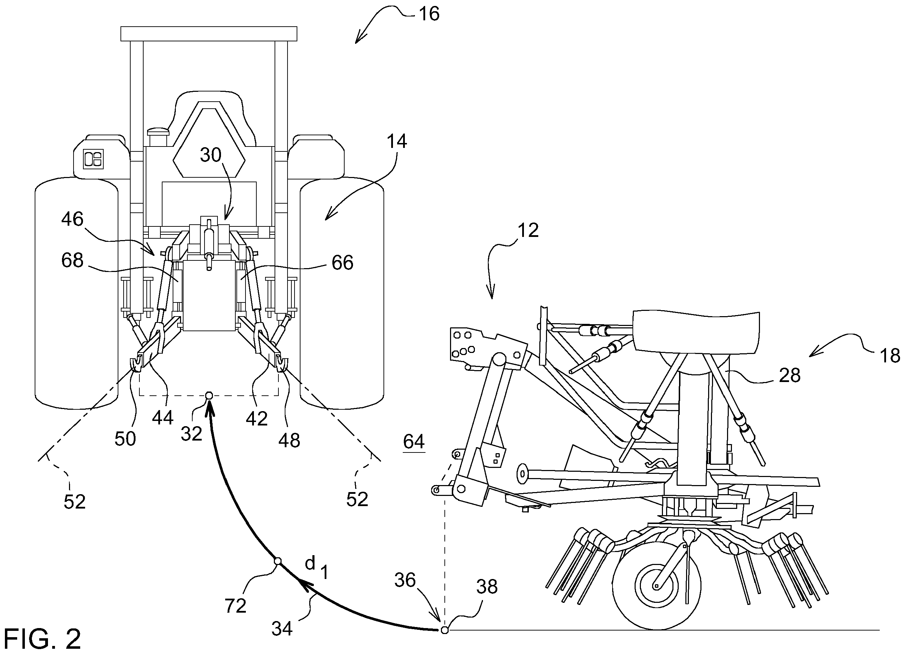

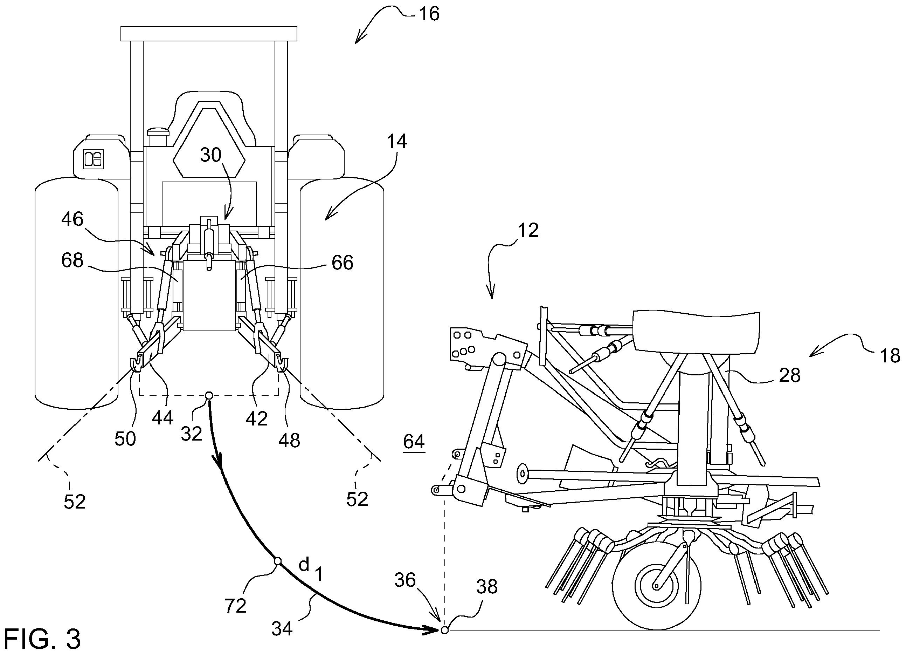

Die dem landwirtschaftlichen Traktor 16 zugeordnete Anordnung 10 umfasst unter anderem eine mikroprozessorgesteuerte Kontrolleinheit 20, die mit einer Positionserfassungseinheit 22, einer Informationseinheit 24 und einer Speichereinheit 26 in Verbindung steht. Die Funktionsweise der Anordnung 10 wie auch deren detaillierter Aufbau (einschließlich weiterer Komponenten) soll hierbei unter Bezugnahme auf die in Fig. 2 und 3 gezeigten Sequenzen, die den Vorgang des Ab- und Wiederankuppeln des Anbaugeräts 18 wiedergeben, erläutert werden.

Beispielsgemäß ist das Anbaugerät 18 durch einen herkömmlichen Kreiselschwader 28 gebildet, der an der als Dreipunkt-Kraftheber 30 ausgebildeten Kupplungseinrichtung 14 des landwirtschaftlichen Traktors 16 angebracht ist. Alternativ kann es sich jedoch auch um ein Anbaugerät 18 bzw. eine Kupplungseinrichtung 14 beliebiger anderer Bauart handeln.

### Abkuppelsequenz

Im Falle der in Fig. 2 gezeigten Abkuppelsequenz wird zunächst bei (noch) hergestellter Kupplungsverbindung von der Kontrolleinheit 20 überprüft, ob ein mit einem Abkuppeln des Anbaugeräts 18 einhergehender Abstellvorgang ausgeführt wird. Ist dies der Fall, so wird seitens der Kontrolleinheit 20 mittels der Positionserfassungseinheit 22 der betreffende Abstellort 32 des Anbaugeräts 18 sowie die ausgehend vom Abstellort 32 entlang einer vorgegebenen Wegstrecke d₁ vom landwirtschaftlichen Traktor 16 zurückgelegte Fahrttrajektorie 34 beim Entfernen vom Abstellort 32 kartografisch bestimmt und gemeinsam mit von der Informationseinheit 24 bereitgestellten Typinformationen hinsichtlich des abgestellten Anbaugeräts 18 in der Speichereinheit 26 als zugehöriger Datensatz abgelegt. Somit wird der Abstellvorgang kartografisch bis zum Ende der vorgegebenen Wegestrecke d₁ aufgezeichnet. Die Länge der vorgegebenen Wegstrecke d₁ liegt dabei typischerweise in der Größenordnung von 10 bis 20 Metern.

### Ankuppelsequenz

Erkennt die Kontrolleinheit 20 zu einem späteren Zeitpunkt aufgrund eines entsprechenden bedienerseitigen Wunsches, dass das selbe Anbaugerät 18 erneut angekuppelt werden soll, so wird von der Kontrolleinheit 20 der dem betreffenden Anbaugerät 18 zugeordnete Datensatz aus der Speichereinheit 26 abgerufen, um den landwirtschaftlichen Traktor 16 ausgehend von einer vorgegebenen sowie vorab einzunehmenden Startposition 36 entlang der sich aus dem Datensatz ergebenden Fahrttrajektorie 34 bis zum Abstellort 32 durch Ausgabe zugehöriger Steuerbefehle zurückzuleiten. Diese Ankuppelsequenz ist in Fig. 3 gezeigt, wobei der landwirtschaftliche Traktor 16 zum Wiederankuppeln des Anbaugeräts 18 auf Grundlage der ausgegebenen Steuerbefehle entlang der aufgezeichneten Fahrttrajektorie 34 zum Abstellort 32 zurückgeführt wird. Hierzu hat der Bediener den landwirtschaftlichen Traktor 16 lediglich mit in Fahrtrichtung liegender, mithin dem anzukuppelnden Anbaugerät 18 zugewandter Kupplungseinrichtung 14 in die vorgegebene Startposition 36 zu verbringen. Letztere ergibt sich dabei aus dem Endpunkt 38 der beim Abkuppeln zurückgelegten Wegstrecke d₁ bzw. der Fahrttrajektorie 34.

Um den Bediener auf die Bereitschaft zur Ausführung des Ankuppelvorgangs hinzuweisen, wird bei Erreichen der Startposition 36 über eine mit der Kontrolleinheit 20 kommunizierende Bedienerschnittstelle 40 eine Freigabebenachrichtigung ausgegeben.

Entsprechend der Ausbildung der Kupplungseinrichtung 14 als Dreipunkt-Kraftheber 30, umfasst diese rechte und linke Unterlenker 42, 44, die sich mittels eines hydraulischen Hubwerks 46 heben und senken lassen, sodass sich an den Unterlenkern 42, 44 vorgesehene Kupplungselemente 48, 50 zur Anbringung der Anbaugeräteschnittstelle 12 in eine gewünschte Betriebsposition 52 verbringen lassen. Hierbei wird die beim Abkuppeln des Anbaugeräts 18 vorliegende Betriebsposition 52 von der Kontrolleinheit 20 als weiterer Bestandteil des Datensatzes in der Speichereinheit abgelegt. Die beim Abkuppeln eingenommene Betriebsposition 52 wird bei Erreichen des Abstellorts 32 wiederaufgerufen, was ein Wiederankuppeln des Anbaugeräts 18 zusätzlich erleichtert.

Die Steuerbefehle werden in Form von Fahranweisungen über die mit der Kontrolleinheit 20 kommunizierende Bedienerschnittstelle 40 als entsprechende Lenk- bzw. Fahrtgeschwindigkeitsanweisungen ausgegeben, und/oder als autonome Eingriffe in eine Lenkung des landwirtschaftlichen Traktors 16. In letzterem Fall bleibt die Vorgabe der Fahrtgeschwindigkeit dem Bediener überlassen, wohingegen die Ausführung der Lenkeingriffe autonom seitens einer zugehörigen Fahrzeugsteuerung 54 erfolgt. Eine derartige Fahrzeugsteuerung 54 ist bei landwirtschaftlichen Traktoren 16 des Herstellers John Deere unter der Bezeichnung "AutoTrac" bekannt.

Der gesamte Kuppelvorgang setzt sich somit aus einer durch die Abkuppelsequenz gegebenen Einlernphase sowie einer durch die nachfolgende Ankuppelsequenz gegebenen Ausführungsphase zusammen.

Die in der Speichereinheit 26 abgelegten Typinformationen, die unter anderem Angaben hinsichtlich des konkreten Anbaugerätemodells enthalten, erlauben dabei in Verbindung mit dem kartografisch hinterlegten Abstellort 32 ein leichteres Wiederauffinden des abgestellten Anbaugeräts 18. Dies ist gerade bei größeren landwirtschaftlichen Betrieben, die über einen entsprechend umfangreichen Maschinenpark verfügen, von Belang.

Die Bereitstellung der Typinformationen seitens der Informationseinheit 24 erfolgt bedienerseitig, wozu die Informationseinheit 24 mit einer in Fig. 1 dargestellten Bedienerschnittstelle 40 zur manuellen Eingabe bzw. Auswahl des betreffenden Anbaugeräts 18 in Form von Angaben zu Hersteller, Modell und dergleichen in Verbindung steht. Abweichend davon ist die Informationseinheit 24 mit einer Datenschnittstelle 56 zum drahtlosen Empfang von entsprechenden Identifikationsdaten seitens eines an dem Anbaugerät 18 befindlichen RFID-Transmitters 58 ausgestattet, in dem die betreffenden Identifikationsdaten hinterlegt sind und bei Annäherung selbsttätig abgerufen werden.

Ferner umfasst die Positionserfassungseinheit 22 einen GPS-Empfänger 60, wobei die Kontrolleinheit 20 von dem GPS-Empfänger 60 bereitgestellte Positionsinformationen dahingehend bewertet, ob diese eine zur kartografischen Bestimmung von Abstellort 32 und Fahrttrajektorie 34 hinreichende Mindestgenauigkeit aufweisen. Ist die geforderte Mindestgenauigkeit nicht gegeben, so veranlasst die Kontrolleinheit 20 über die Bedienerschnittstelle 40 die Ausgabe einer entsprechenden optischen und/oder akustischen Fahrerinformation. Zugleich wird der Aufzeichnungsvorgang beendet. Die Erzeugung eines fehlerhaften bzw. unbrauchbaren Datensatzes kann so vermieden werden.

Für den Fall, dass sich während der in Fig. 2 dargestellten Abkuppelsequenz bzw Aufzeichnungsphase der GPS-Empfang nach Verlassen des Abstellorts 32 beim nachfolgenden Durchfahren der vorgegebenen Wegstrecke d₁ soweit verschlechtert, dass die von dem GPS-Empfänger 60 bereitgestellten Positionsinformationen die geforderte Mindestgenauigkeit nicht erreichen, wird die Bestimmung der Fahrttrajektorie 34 von der Kontrolleinheit 20 virtuell fortgesetzt, indem mittels eines Kamerasystems 62 eine bildbasierte Erfassung prägnanter Merkmale des Anbaugeräts 18 und/oder der Umgebung 64 erfolgt, die als räumliche Orientierungspunkte für den Verlauf der Fahrttrajektorie 34 sowie der Lage der zum Wiederankuppeln des Anbaugeräts 18 einzunehmenden Startposition 36 dienen. Zu diesem Zweck wird ein sogenannter Simultaneous Localization and Mapping (SLAM)-Algorithmus verwendet. Bei dem in Fig. 1 gezeigten Kamerasystem 62 handelt sich um eine RGB-Monokamera, eine Stereokamera oder eine nach dem Laufzeitverfahren arbeitende Time-of-Flight (ToF)-Kamera. Zum Wiederankuppeln des Anbaugeräts 18 wird der landwirtschaftliche Traktor 16 zunächst in die Nähe des Endpunkts 38 der Fahrttrajektorie 34 verbracht. Sobald die Kontrolleinheit 20 anhand der von dem Kamerasystem 62 bereitgestellten Bilddaten die für das betreffende Anbaugerät 18 aufgezeichneten Orientierungspunkte räumlich identifiziert hat, wird der in Fig. 3 dargestellte Ankuppelvorgang bzw. die Ausführungsphase durch Ausgabe der zugehörigen Steuerbefehle von der Kontrolleinheit 20 gestartet.

Gemäß einer optionalen Ausgestaltung der Anordnung 10 kann ein weiterer (in Fig. 1 nicht gezeigter) GPS-Empfänger vorhanden sein, der gegenüber dem bereits erwähnten GPS-Empfänger 60 versetzt am landwirtschaftlichen Traktor 16 angeordnet ist. Dies ermöglicht es, zusätzlich den Schwimmwinkel und damit die Ausrichtung des landwirtschaftlichen Traktors 16 am Abstellort 32 bzw. entlang der Fahrtrajektorie 34 in Bezug auf die Traktorhochachse zu bestimmen und als Bestandteil des Datensatzes in der Speichereinheit 36 abzulegen.

Die Kontrolleinheit 20 schließt auf die Ausführung eines Abstellvorgangs, wenn an der Kupplungseinrichtung 14 eine für ein Abkuppeln des Anbaugeräts 18 charakteristische Abnahme der Kupplungslast erkannt wird. Diese Information dient als Initiator für die kartografische Aufzeichnung der Fahrttrajektorie 34 sowie des Abstellorts 32. Dazu werden die in zugehörigen Hydraulikzylindern 66, 68 des hydraulischen Hubwerks 46 des Dreipunkt-Krafthebers 30 herrschenden Druckverhältnisse zur Beurteilung der auf die Unterlenker 42, 44 wirkenden Kupplungslast herangezogen. Die in den Hydraulikzylindern 66, 68 herrschenden Druckverhältnisse werden mittels wenigstens eines mit der Kontrolleinheit 20 kommunizierenden Drucksensors 70 aufgenommen.

Zusätzlich oder alternativ schließt die Kontrolleinheit 20 auf die Ausführung eines Abstellvorgangs, wenn diese erkennt, dass eine auf ein Abkuppeln des Anbaugeräts 18 hinweisende ISOBUS-Information und/oder eine insofern vorgenommene Bedienereingabe vorliegt. Eine entsprechende ISOBUS-Information wird insbesondere beim Trennen einer zwischen Anbaugerät 18 und landwirtschaftlichem Traktor 16 hergestellten ISOBUS-Steckverbindung erzeugt oder aber durch Abmelden des Anbaugeräts 18 über die mit der Kontrolleinheit 20 kommunizierende Bedienerschnittstelle 40.

Optional wird entlang der vorgegebenen Wegstrecke d₁ eine Relativlage des Anbaugeräts 18 in Bezug auf den landwirtschaftlichen Traktor 16 optisch erfasst und von der Kontrolleinheit 20 als Bestandteil des Datensatzes in der Speichereinheit 26 abgelegt. Die optische Erfassung erfolgt mittels des Kamerasystems 62, und zwar bei Erreichen einer vorgegebenen Zwischenposition 72. Die Zwischenposition 72 liegt beispielsgemäß bei der halben Wegstrecke d₁ der zurückgelegten Fahrttrajektorie 34. Die solchermaßen erfasste Relativlage erlaubt eine Beurteilung dahingehend, ob das Anbaugerät 18 zwischenzeitlich (seit dem Abstellen) bewegt bzw. verlagert wurde. Hierzu wird die in der Speichereinheit 26 abgelegte Relativposition mit einer aktuellen Relativposition des Anbaugeräts 18 verglichen, wobei letztere durch erneute optische Erfassung des Anbaugeräts 18 ermittelt wird, sobald der landwirtschaftliche Traktor 16 entlang der Fahrttrajektorie 34 die vorgegebene Zwischenposition 72 erreicht hat. Ist dies der Fall, so wird der Verlauf der Fahrttrajektorie 34 von der Kontrolleinheit 20 dahingehend angepasst, dass trotz der veränderten Lage des Anbaugeräts 18 ein problemloses Wiederankuppeln möglich ist. Sollte dies nicht möglich sein, wird der Ankuppelvorgang von der Kontrolleinheit 20 abgebrochen, wobei dies unter gleichzeitiger Ausgabe eines entsprechenden optischen und/oder akustischen Fahrerhinweises über die Bedienerschnittstelle 40 erfolgt.

Daneben werden die Typinformationen von der Kontrolleinheit 20 um eine entlang der vorgegebenen Wegstrecke d₁ erstellte fotografische Wiedergabe des Anbaugeräts 18 ergänzt. Die ebenfalls von dem Kamerasystem 62 erstellte fotografische Wiedergabe wird zur besseren Auffindbarkeit bzw. Identifizierbarkeit des anzukoppelnden Anbaugeräts 18 über ein von der Bedienerschnittstelle 40 umfasstes Display 74 nebst dem weiteren Inhalt des zugehörigen Datensatzes angezeigt.

Grundsätzlich kann es sich jeweils um denselben landwirtschaftlichen Traktor 16 oder aber um unterschiedliche landwirtschaftliche Traktoren handeln. Letzteres ist bei größeren Landwirtschaftsbetrieben regelmäßig der Fall. Unter derartigen Umständen ist vorgesehen, dass der Datensatz von der Kontrolleinheit 20 über die Datenschnittstelle 56 an eine zentrale Datencloud 76 übermittelt wird, sodass dieser über ein Farmmanagementsystem 78 oder dergleichen für sämtliche in Frage kommenden Anwendungen zur Verfügung steht. Die Übermittlung an die Datencloud 76 erfolgt hierbei vorbehaltlich der Prüfung und Freigabe durch einen Bediener.

Die nach dem Abstellen des Anbaugeräts 18 durchfahrene Fahrttrajektorie 34 weist entweder einen bedienerseitig vorgebbaren Verlauf auf oder wird auf Veranlassung der Kontrolleinheit 20 entlang einer Geraden zumindest teilautonom abgefahren. Im ersten Fall obliegt die Lenkung wie auch die Vorgabe der Fahrtgeschwindigkeit zur Gänze dem Bediener des landwirtschaftlichen Traktors 16, im zweiten Fall erfolgt die Lenkung seitens der Fahrzeugsteuerung 54 autonom, die Vorgabe der Fahrtgeschwindigkeit bleibt weiterhin dem Bediener überlassen.

Da zur Feldbearbeitung üblicherweise eine Vielzahl verschiedener Anbaugeräte eingesetzt wird, sortiert die Kontrolleinheit 20 mehrere in der Speichereinheit 26 hinterlegte Datensätze von an verschiedenen Abstellorten befindlichen Anbaugeräten entsprechend ihrer aktuellen Entfernung zum landwirtschaftlichen Traktor 16, um eine entfernungsabhängige Auflistung verfügbarer Anbaugeräte zu erzeugen. Die Auflistung wird über das von der Bedienerschnittstelle 40 umfasste Display 74 angezeigt, sodass sich das anzukoppelnde Anbaugerät 18 einschließlich des insofern abzurufenden Datensatzes bequem auswählen lässt. Zusätzlich erfolgt die Anzeige einer kartografischen Übersichtsdarstellung der jeweiligen Abstellorte relativ zum landwirtschaftlichen Traktor 16, wobei der Bediener nach Auswahl des gewünschten Anbaugeräts 18 zum zugehörigen Startpunkt navigiert wird.

Optional wird das anzukoppelnde Anbaugerät 18 von der Kontrolleinheit 20 bei Annäherung des landwirtschaftlichen Traktors 16 optisch identifiziert, um den zugehörigen Datensatz selbsttätig aus der Speichereinheit 26 abzurufen. Zur optischen Identifikation wird die von dem Kamerasystem 62 erstellte fotografische Wiedergabe des anzukoppelnden Anbaugeräts 18 herangezogen, wozu diese mit den Bilddaten einer in der Speichereinheit 26 enthaltenen Standardauswahl an Anbaugeräten verglichen wird. Die Bewertung der Übereinstimmung und damit die optische Identifikation des Anbaugeräts 18 erfolgt seitens der Kontrolleinheit 20 unter Verwendung eines neuronalen Netzwerks, insbesondere eines sogenannten Convolutional Neural Networks. Die Standardauswahl kann hierbei durch Einlernen weiterer Anbaugeräte bedienerseitig erweitert werden.

## Patentansprüche

1. Verfahren zur Unterstützung eines an einer landwirtschaftlichen Anbaugeräteschnittstelle durchzuführenden Kuppelvorgangs, bei dem die Anbaugeräteschnittstelle (12) der Herstellung einer lösbaren Kupplungsverbindung zwischen einer Kupplungseinrichtung (14) eines landwirtschaftlichen Traktors (16) und einem daran anzubringenden Anbaugerät (18) dient, **dadurch gekennzeichnet, dass** in einem ersten Schritt bei hergestellter Kupplungsverbindung von einer Kontrolleinheit (20) überprüft wird, ob ein mit einem Abkuppeln des Anbaugeräts (18) einhergehender Abstellvorgang ausgeführt wird, wobei in einem solchen Fall seitens der Kontrolleinheit (20) in einem zweiten Schritt mittels einer Positionserfassungseinheit (22) ein Abstellort (32) des Anbaugeräts (18) sowie eine ausgehend vom Abstellort (32) entlang einer vorgegebenen Wegstrecke (di) vom landwirtschaftlichen Traktor (16) zurückgelegte Fahrttrajektorie (34) kartografisch bestimmt und in einem dritten Schritt gemeinsam mit von einer Informationseinheit (24) bereitgestellten Typinformationen hinsichtlich des abgestellten Anbaugeräts (18) in einer Speichereinheit (26) als zugehöriger Datensatz abgelegt wird, wobei in einem vierten Schritt zum Wiederankuppeln des selben Anbaugeräts (18) von der Kontrolleinheit (20) der Datensatz aus der Speichereinheit (26) abgerufen wird, um den landwirtschaftlichen Traktor (16) ausgehend von einer vorgegebenen sowie vorab einzunehmenden Startposition (36) entlang der Fahrttrajektorie (34) bis zum Abstellort (32) durch Ausgabe zugehöriger Steuerbefehle zurückzuleiten.

2. Verfahren nach Anspruch 1, **dadurch gekennzeichnet, dass** die Positionserfassungseinheit (22) mindestens einen GPS-Empfänger (60) umfasst, wobei die Kontrolleinheit (20) von dem mindestens GPS-Empfänger (60) bereitgestellte Positionsinformationen dahingehend bewertet, ob diese eine zur kartografischen Bestimmung des Abstellorts (32) sowie der Fahrttrajektorie (34) hinreichende Mindestgenauigkeit aufweisen.

3. Verfahren nach Anspruch 2, **dadurch gekennzeichnet, dass** die Bestimmung der Fahrttrajektorie (34) von der Kontrolleinheit (20) virtuell fortgesetzt wird, wenn sich der GPS-Empfang nach Verlassen des Abstellorts (32) beim nachfolgenden Durchfahren der vorgegebenen Wegstrecke (di) soweit verschlechtert, dass die von dem mindestens einen GPS-Empfänger (60) bereitgestellten Positionsinformationen die geforderte Mindestgenauigkeit nicht erreichen.

4. Verfahren nach wenigstens einem der vorhergehenden Ansprüche, **dadurch gekennzeichnet, dass** die Kontrolleinheit (20) auf die Ausführung eines Abstellvorgangs schließt, wenn an der Kupplungseinrichtung (14) eine für ein Abkuppeln des Anbaugeräts (18) charakteristische Abnahme der Kupplungslast erkannt wird.

5. Verfahren nach wenigstens einem der vorhergehenden Ansprüche, **dadurch gekennzeichnet, dass** die Kontrolleinheit (20) auf die Ausführung eines Abstellvorgangs schließt, wenn diese erkennt, dass eine auf ein Abkuppeln des Anbaugeräts (18) hinweisende ISOBUS-Information (18) und/oder eine insofern vorgenommene Bedienereingabe vorliegt.

6. Verfahren nach wenigstens einem der vorhergehenden Ansprüche, **dadurch gekennzeichnet, dass** entlang der vorgegebenen Wegstrecke (di) eine Relativlage des Anbaugeräts (18) in Bezug auf den landwirtschaftlichen Traktor (16) optisch erfasst und von der Kontrolleinheit (20) als Bestandteil des Datensatzes in der Speichereinheit (26) abgelegt wird.

7. Verfahren nach wenigstens einem der vorhergehenden Ansprüche, **dadurch gekennzeichnet, dass** die Typinformationen von der Kontrolleinheit (20) um eine entlang der vorgegebenen Wegstrecke (di) erstellte fotografische Wiedergabe des Anbaugeräts (18) ergänzt werden.

8. Verfahren nach wenigstens einem der vorhergehenden Ansprüche, **dadurch gekennzeichnet, dass** der Datensatz von der Kontrolleinheit (20) an eine zentrale Datencloud (76) übermittelt wird.

9. Verfahren nach wenigstens einem der vorhergehenden Ansprüche, **dadurch gekennzeichnet, dass** die nach dem Abstellen des Anbaugeräts (18) durchfahrene Fahrttrajektorie (34) entweder einen bedienerseitig vorgebbaren Verlauf aufweist oder aber auf Veranlassung der Kontrolleinheit (20) entlang einer Geraden zumindest teilautonom abgefahren wird.

10. Verfahren nach wenigstens einem der vorhergehenden Ansprüche, **dadurch gekennzeichnet, dass** die Kontrolleinheit (20) mehrere Datensätze von an verschiedenen Abstellorten befindlichen Anbaugeräten entsprechend ihrer aktuellen Entfernung zum landwirtschaftlichen Traktor (16) sortiert, um eine entfernungsabhängige Auflistung verfügbarer Anbaugeräte zu erzeugen.

11. Verfahren nach wenigstens einem der vorhergehenden Ansprüche, **dadurch gekennzeichnet, dass** das anzukoppelnde Anbaugerät (18) von der Kontrolleinheit (20) bei Annäherung des landwirtschaftlichen Traktors (16) optisch identifiziert wird, um den zugehörigen Datensatz selbsttätig aus der Speichereinheit (26) abzurufen.

12. Verfahren nach Anspruch 11, **dadurch gekennzeichnet, dass** die optische Identifikation des Anbaugeräts (18) seitens der Kontrolleinheit (20) unter Verwendung eines neuronalen Netzwerks, insbesondere eines sogenannten Convolutional Neural Networks, erfolgt.

13. Verfahren nach wenigstens einem der vorhergehenden Ansprüche, **dadurch gekennzeichnet, dass** die Kupplungseinrichtung (14) wenigstens ein bezüglich einer Betriebsposition (52) verstellbares Kupplungselement (48, 50) zur Anbringung der Anbaugeräteschnittstelle (12) aufweist, wobei die beim Abkuppeln des Anbaugeräts (18) vorliegende Betriebsposition (52) von der Kontrolleinheit (20) als Bestandteil des Datensatzes in der Speichereinheit (26) abgelegt wird.

14. Verfahren nach wenigstens einem der vorhergehenden Ansprüche, **dadurch gekennzeichnet, dass** die Steuerbefehle in Form von Fahranweisungen über eine über eine mit der Kontrolleinheit (20) kommunizierende Bedienerschnittstelle (40) als entsprechende Lenk- bzw. Fahrtgeschwindigkeitsanweisungen und/oder als autonome Eingriffe in eine Lenkung des landwirtschaftlichen Traktors (16) ausgegeben werden.

15. Verfahren nach wenigstens einem der vorhergehenden Ansprüche, **dadurch gekennzeichnet, dass** bei Erreichen der Startposition (36) über eine mit der Kontrolleinheit (20) kommunizierende Bedienerschnittstelle (40) eine Freigabebenachrichtigung ausgegeben wird.
